# EUROPEAN PATENT SPECIFICATION

(11) **EP 1 998 506 B1**
(45) Date of publication and mention of the grant of the patent: **09.12.2009**
(21) Application number: 07119784.2
(22) Date of filing: 31.10.2007
(51) Int. Cl.: H04L 12/46

(54) **Method for controlling the connection of a virtual network**
Verfahren zur Steuerung der Verbindung eines virtuellen Netzwerkes
Procédé pour le contrôle de la connexion d'un réseau virtuel

(30) Priority: 31.05.2007 JP 2007144586
(43) Date of publication of application: 03.12.2008
(73) Proprietor: Fuji Xerox Co., Ltd., Minato-ku, Tokyo (JP)
(72) Inventor: Matsuoka, Takao c/o Fuji Xerox Co., Ltd.,, Tokyo Tokyo (JP)
(74) Representative: Carpintero Lopez, Francisco

(56) References cited:
- EP-A- 1 624 638
- US-A1- 2002 099 669
- US-A1- 2006 120 374

## Description

### BACKGROUND

### TECHNICAL FIELD

The present invention relates to a virtual network connection apparatus, a system, a method for controlling connection of a virtual network and a program.

### RELATED ART

Recently, VPN (Virtual Private Network) services have come into wide use. VPN service is a service which enables exclusive communication, similar to that offered by a dedicated line, between a host or a site and another host or site via a public network such as the Internet. In a typical VPN, a packet on the VPN is encapsulated and tunneled through the real IP network.

A system described in JP 2001-313663 A provides a virtual network interface which enables abstraction of a logical network; determines a correspondence between a physical network interface, a virtual network interface, and a logical network; transmits and receives only packets which are correlated to the physical network interface and the virtual network interface; and controls packets that are communicated between the virtual network interface and the physical network interface.

Although the network is a virtual network, because the encapsulated packet is transmitted via a real network, an address on the real network of an information processor which is a member of the virtual network must be set in a virtual network connection apparatus. However, there may be cases where the address of the member cannot be known in advance, such as when an information processor which is a member of a certain virtual network is moved and attempts to connect to the virtual network in a network environment which differs from the network environment registered in advance, or when an information processor which is not a member of the virtual network is to temporarily participate as a member of the virtual network. In such cases, although an administrator may check the address of the member and set the address in thee virtual network connection apparatus, such a process requires a very large amount of work.

US-A-2006/120374 discloses a packet forwarding apparatus and communication network suitable for wide area ethernet service.

### SUMMARY

An advantage of the present invention is provision of a virtual network connection apparatus which can reduce a load imposed on an administrator when an information processor having an address which cannot be known in advance is to participate in a virtual network.

According to a first aspect of the present invention, there is provided a virtual network connection apparatus having a formation instruction reception unit that receives a formation instruction for forming a virtual network; an identifier assignment unit that assigns a unique virtual network identifier in response to the formation instruction received by the formation instruction reception unit; a designation reception unit that receives designation of an information processor which forms a part of the virtual network; a first registration unit that issues connection permission information for an information processor which is designated to the designation reception unit and registers the issued connection permission information in a first storage unit in correlation to the virtual network identifier assigned by the identifier assignment unit; a correlation processor that determines, upon receipt of a connection request including the connection permission information from an information processor, a virtual network identifier correlated to the connection permission information by reference to the first storage unit and executes a process to correlate an address of the information processor to the determined virtual network identifier; and a transmission controller that determines, upon receipt of transmitted information including a source address and a destination address from an information processor, a virtual network identifier correlated to the source address and a virtual network identifier correlated to the destination address, and executes a control to transmit the transmitted information to the destination address by reference to the determined virtual network identifier correlated to the source address and the determined virtual network identifier correlated to the destination address.

According to a second aspect of the present invention, the virtual network connection apparatus further includes a second storage unit that stores one or more approval party addresses in correlation to the virtual network identifier, wherein the correlation processor determines, upon receipt of the connection request including the connection permission information from an information processor, an approval party address correlated to the virtual network identifier corresponding to the connection permission information by reference to the second storage unit, inquires the determined approval party address as to whether or not a connection from the information processor is to be approved, and, based on a response to the inquiry, determines whether or not an address of the information processor is to be correlated to the virtual network identifier.

According to a third aspect of the present invention, the virtual network connection apparatus further includes a third storage unit that stores, for each virtual network identifier, an approval rule for determining whether or not an address of the information processor is to be correlated to the virtual network identifier, based on a response from each approval party address correlating to the virtual network identifier, wherein the correlation processor determines whether or not the address of the information processor is to be correlated to the virtual network identifier based on a response from each approval party address correlated to the virtual network identifier corresponding to the connection permission information included in the connection request and the approval rule correlated to the virtual network identifier.

According to a fourth aspect of the present invention, the virtual network connection apparatus further includes a notification transmission unit that transmits, to the information processor, notification information correlated to connection permission information issued by the first registration unit.

According to a fifth aspect of the present invention, there is provided a program which, when executed, causes a computer to function as: a formation instruction reception unit that receives a formation instruction for forming a virtual network; an identifier assignment unit that assigns a unique virtual network identifier in response to the formation instruction received by the formation instruction reception unit; a designation reception unit that receives a designation of an information processor which forms a part of the virtual network; a first registration unit that issues connection permission information for an information processor which is designated to the designation reception unit and registers the issued connection permission information in a first storage unit in correlation to the virtual network identifier assigned by the identifier assignment unit; a correlation processor that determines, upon receipt of a connection request including the connection permission information from an information processor, a virtual network identifier correlated to the connection permission information by reference to the first storage unit and executes a process to correlate an address of the information processor to the determined virtual network identifier; and a transmission controller that determines, upon receipt of transmitted information including a source address and a destination address from an information processor, a virtual network identifier correlated to the source address and a virtual network identifier correlated to the destination address, and executes a control to transmit the transmitted information to the destination address by reference to the determined virtual network identifier correlated to the source address and the determined virtual network identifier correlated to the destination address.

According to a sixth aspect of the present invention, the program further causes the computer to function as: a second storage unit that stores one or more approval party addresses in correlation to the virtual network identifier, wherein the correlation processor determines, upon receipt of the connection request including the connection permission information from an information processor, an approval party address correlated to the virtual network identifier corresponding to the connection permission information by reference to the second storage unit, inquires the determined approval party address as to whether or not a connection from the information processor is to be approved, and, based on a response to the inquiry, determines whether or not an address of the information processor is to be correlated to the virtual network identifier.

According to a seventh aspect of the present invention, the program further causes the computer to function as: a third storage unit that stores, for each virtual network identifier, an approval rule for determining whether or not an address of the information processor is to be correlated to the virtual network identifier, based on a response from each approval party address correlating to the virtual network identifier, wherein the correlation processor determines whether or not the address of the information processor is to be correlated to the virtual network identifier based on a response from each approval party address correlated to the virtual network identifier corresponding to the connection permission information included in the connection request and the approval rule correlated to the virtual network identifier.

According to a eighth aspect of the present invention, the program further causes the computer to function as: a notification transmission unit that transmits, to the information processor, notification information correlated to connection permission information issued by the first registration unit.

According to a ninth aspect of the present invention, there is provided a virtual network system including: a virtual network connection apparatus; and one or more information processors, wherein the virtual network connection apparatus includes: a formation instruction reception unit that receives a formation instruction for forming a virtual network; an identifier assignment unit that assigns a unique virtual network identifier in response to the formation instruction received by the formation instruction reception unit; a designation reception unit that receives a designation of an information processor which forms a part of the virtual network; a first registration unit that issues connection permission information for an information processor which is designated to the designation reception unit and registers the issued connection permission information in a first storage unit in correlation to the virtual network identifier assigned by the identifier assignment unit; a correlation processor that determines, upon receipt of a connection request including the connection permission information from an information processor, a virtual network identifier correlated to the connection permission information by reference to the first storage unit and executes a process to correlate an address of the information processor to the determined virtual network identifier; and a transmission controller that determines, upon receipt of transmitted information including a source address and a destination address from an information processor, a virtual network identifier correlated to the source address and a virtual network identifier correlated to the destination address, and executes a control to transmit the transmitted information to the destination address by reference to the determined virtual network identifier correlated to the source address and the determined virtual network identifier correlated to the destination address; and the information processor includes: a unit that transmits to the virtual network connection apparatus a connection request including the connection permission information; and a unit that transmits transmitted information including a source address and a destination address.

According to a tenth aspect of the present invention, there is provided a method for controlling connection of a virtual network, including steps of: (a) receiving a formation instruction for forming a virtual network; (b) assigning a unique virtual network identifier in response to the received formation instruction; (c) receiving a designation of an information processor which forms a part of the virtual network; (d) issuing connection permission information for the designated information processor and registering the issued connection permission information in a first storage unit in correlation to the assigned virtual network identifier; (e) determining, upon receipt of a connection request including the connection permission information from an information processor, a virtual network identifier correlated to the connection permission information by reference to the first storage unit and executing a process to correlate an address of the information processor to the determined virtual network identifier; and (f) determining, upon receipt of transmitted information including a source address and a destination address from an information processor, a virtual network identifier correlated to the source address and a virtual network identifier correlated to the destination address, and executing a control to transmit the transmitted information to the destination address based on the determined virtual network identifier correlated to the source address and the determined virtual network identifier correlated to the destination address.

According to a eleventh aspect of the present invention, the method further includes (g) a step of storing one or more approval party addresses to a second storage unit in correlation to the virtual network identifier, wherein the step (e) includes a step of determining, upon receipt of the connection request including the connection permission information from an information processor, an approval party address correlated to the virtual network identifier corresponding to the connection permission information by reference to the second storage unit, inquiring the determined approval party address as to whether or not a connection from the information processor is to be approved, and, based on a response to the inquiry, determining whether or not an address of the information processor is to be correlated to the virtual network identifier.

According to a twelfth aspect of the present invention, the method further includes (h) a step of storing, for each virtual network identifier, an approval rule for determining whether or not an address of the information processor is to be correlated to the virtual network identifier, based on a response from each approval party address correlating to the virtual network identifier, wherein the step (e) includes a step of determining whether or not the address of the information processor is to be correlated to the virtual network identifier based on a response from each approval party address correlated to the virtual network identifier corresponding to the connection permission information included in the connection request and the approval rule correlated to the virtual network identifier.

According to a thirteenth aspect of the present invention, the method further includes (i) a step of transmitting, to the information processor, notification information correlated to connection permission information issued in the step (d).

According to the first, fifth, ninth or tenth aspect of the present invention, a load imposed on the administrator when an information processor having an address which cannot be known in advance is to participate in a virtual network can be reduced as compared with the case of a configuration in which the present invention is not utilized.

According to the second, sixth or eleventh aspect of the present invention described in Claim 2, because connection to the virtual network requires an approval by an approving party in addition to the connection permission information, the security of the virtual network can be improved as compared with the case of a configuration in which the present invention is not utilized.

According to the third, seventh or twelfth aspect of the present invention, it is possible to determine whether or not an information processor is to be connected to the virtual network, by reference to an individual approval rule for each virtual network.

According to the fourth, eighth or thirteenth aspect of the present invention, a device which is designated as an information processor in the virtual network can acquire the connection permission information of the virtual network.

### BRIEF DESCRIPTION OF THE DRAWINGS

Exemplary embodiment(s) of the present invention will be described in detail by reference to the following figures, wherein:
Fig. 1 is a diagram showing an example structure of a network;
Fig. 2 is a diagram showing an example structure of a VPN server;
Fig. 3 is a diagram showing an example of data in a VPN/group ID correlation information DB;
Fig. 4 is a diagram showing an example of data in an authentication information DB;
Fig. 5 is a diagram showing an example of a process for forming a virtual network;
Fig. 6 is a diagram showing an example of an internal structure of a VPN server in an alternative exemplary embodiment;
Fig. 7 is a diagram showing an example of data in an approval policy DB in an alternative exemplary embodiment;
Fig. 8 is a diagram showing an example of data in an authentication information DB in an alternative exemplary embodiment;
Fig. 9 is a diagram showing an example of a process for forming a virtual network in an alternative exemplary embodiment; and
Fig, 10 is a diagram showing an example hardware structure of a computer.

### DETAILED DESCRIPTION

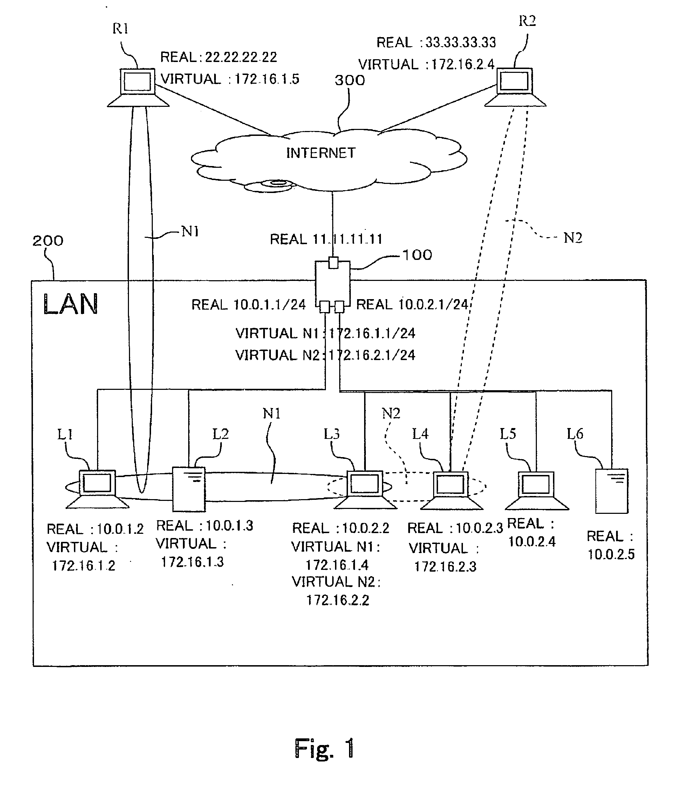

In the following description, exemplary embodiments of the present invention will be described while a network structure shown in Fig. 1 is used as an example. In the network structure of Fig. 1, a LAN (Local Area Network) 200 and remote hosts R1 and R2 are connected to the Internet 300. Each of the remote hosts R1 and R2 is a computer (information processor) such as a personal computer, and is connected to the Internet 300 via an ISP (Internet Service Provider). In addition, a VPN (Virtual Private Network) server 100 is provided at a boundary between the LAN 200 and the Internet 300. The VPN server 100 has a router function for IP (Internet Protocol) routing, and a VPN connection control function. The LAN 200 shown in Fig. 1 includes a network with network addresses of 10.0.1.0/24 and a network with network addresses of 10.0.2.0/24. A personal computer L1 and a server L2 are connected to the former, and personal computers L3, L4, and L5 and a server L6 are connected to the latter.

Next, an example of an internal structure of the VPN server 100 will be described with reference to Fig, 2. The VPN server 100 has a VPN formation instruction reception unit 102, a member registration instruction reception unit 104, a VPN setting unit 106, a member registration notification unit 108, a connection key issuance unit 110, a VPN connection controller 112, and a routing controller 114. These function modules execute various processes using information such as a VPN routing rule 116, an authentication information DB (database) 118, and a VPN/group ID correlation information DB 120.

The VPN formation instruction reception unit 102 receives a VPN formation instruction from a computer operated by a user. The VPN formation instruction unit 102 may provide user interface screen information for receiving the VPN formation instruction. The user interface screen information may be, for example, a webpage. More specifically, in the exemplary embodiment, the user may operate the computer (web browser) to access a URL (Uniform Resource Locator) of the webpage for VPN formation instruction, and acquire the webpage from the VPN server 100. The webpage includes, for example, a button for instructing the VPN formation, and, when a user presses the button with a click operation of a mouse or the like, the computer transmits the VPN formation instruction to the VPN server 100.

The provision of the webpage for VPN formation instruction from the VPN server 100 to the computer of the user is merely exemplary. Alternatively, a VPN client application having the user interface for various operations such as the VPN formation instruction may be installed in the user's computer.

Alternatively, there may be employed a configuration in which the VPN formation instruction reception unit 102 does not receive a VPN formation instruction from outside of the LAN 200 to which the VPN server 100 belongs. For this purpose, for example, the VPN server 100 may be set so that the VPN server 100 only receives the VPN formation instruction from an IP address within the LAN 200. Alternatively, there may be employed a configuration in which the access to the webpage for VPN formation instruction is not permitted from an address outside of the LAN 200.

The member registration instruction reception unit 104 receives an instruction for registering a computer to be a member of a VPN for a VPN formed in response to an instruction received by the VPN formation instruction reception unit 102. In this case, the member registration instruction reception unit 104 may provide, for example, a list of computers which are candidates of the member to the user's computer and the user may select a member from the list. The list may include, for each candidate computer, identification information for identifying the computer (hereinafter referred to as "node ID") and a notification address which is used to transmit a notification to the computer (for example, an electronic mail address or IP address). Any identification information may be used as the node ID, so long as the computer can be identified. For example, a MAC (Media Access Control) address of an NIC (Network Interface Card) in the computer may be used as the node ID. Alternatively, a product identification number of an operating system controlling the computer may be used as the node ID. Alternatively, it is also possible to determine a value of a predetermined data length from a predetermined combination of one or more identification numbers among the identification numbers including product identification numbers of hardware elements of the computer such as the CPU and the hard disk drive, the MAC address of the NIC, and the product identification number of the operating system (for example, a hash value of a data array of the identification numbers) and set the determined value as the node ID.

In an alternative configuration, a list of electronic mail addresses of users may be used as the list of candidates. In this case, a candidate computer is designated with an electronic mail address of the user.

The list of the member candidates may be registered in, for example, the VPN server 100, by the system administrator in advance. In an alternative configuration, when the VPN client application is started on a computer, the application may notify the node ID and the address (for example, electronic mail address or IP address) of the computer to the VPN server 100 and the VPN server 100 may register the node ID and the address in a list. In this case, the electronic mail address may be set by the user or the like in the application in advance and the IP address may be acquired from the operating system.

A user interface screen for allowing selection of a member from a list of candidates may be provided from the VPN server 100 to the user's computer as a webpage. In an alternative configuration, a VPN client application for providing a user interface screen for member selection may be installed in the computer.

When a method to designate a member with an electronic mail address is to be used, a user interface screen for inputting the electronic mail address of the member as a character string may be used.

The VPN setting unit 106 executes setting for forming a VPN (virtual network) in response to a formation instruction received by the VPN formation instruction reception unit 102. In this setting process, for example, an identifier (hereinafter referred to as a "group ID") for uniquely identifying the VPN to be formed in response to the formation instruction and a virtual network address representing the VPN are assigned, and these pieces of information are registered in the VPN server 100 as setting information. In an example configuration, a pair consisting of the assigned group ID and the virtual network address is registered in the VPN/group ID correlation information DB 120.

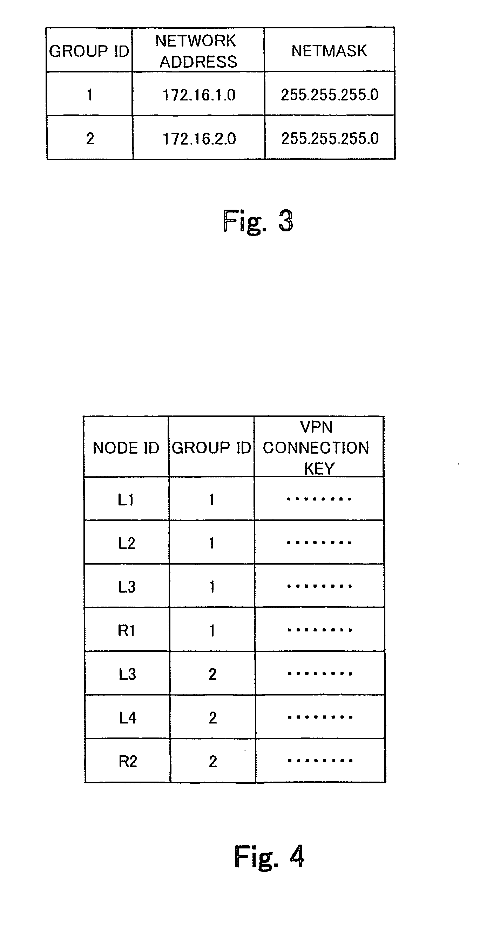

Fig. 3 shows an example of data in the VPN/group ID correlation information DB 120. This example corresponds to the two virtual networks N1 and N2 shown in Fig . 1. A group ID assigned to the virtual network N1 is "1" and a group ID assigned to the virtual network N2 is "2." In the example configuration, a virtual network address is represented as a pair consisting of a network address and a netmask.

The member registration notification unit 108 transmits registration notification information to a notification address of the member selected by an instruction received by the member registration instruction reception unit 104. The registration notification information may include, for example, a URL of a webpage for acquiring a VPN connection key.

The VPN connection key is one kind of authentication information certifying, to the VPN server 100, that the computer is a member of the VPN. The VPN connection key may be a common value for all members of the VPN or may be different for each member. For example, a value obtained by inputting a combination of the group ID and the node ID into a predetermined function (for example, a hash function) may be set as the VPN connection key so that the VPN connection key has a different value for each member.

The registration notification information may additionally include a text indicating that the computer is invited to the VPN. In addition, in order to allow the user receiving the registration notification information to understand the kind of VPN to which the computer is invited, the registration notification information may include a name of a user instructing the formation of the VPN. Alternatively, the registration notification information may include names of other members (user name or host name) of the VPN.

The connection key issuance unit 110 issues to the member registration instruction reception unit 104 the VPN connection key for the designated member. When, for example, the connection key issuance unit 110 receives a connection key acquisition request from a computer of a user receiving the registration notification information, the connection key issuance unit 110 returns a VPN connection key corresponding to the request. When the connection key issuance unit 110 issues a VPN connection key to a member, the connection key issuance unit 110 registers the VPN connection key in the authentication information DB 118, in correlation to the group ID of the virtual network. When each member is to be issued a different VPN connection key, the connection key issuance unit 110 additionally registers, in the authentication information DB 118, the node ID which is the identification information of the member, in correlation to the VPN connection key.

Fig. 4 shows an example of data of the authentication information DB 118. This example configuration corresponds to the virtual networks N1 and N2 shown in Fig. 1. Specifically, in the example configuration of Fig. 1, the computer L1, the server L2, and the computer L3 in the LAN 200 and the remote host R1 outside of the LAN 200 participate in the virtual network. N1 (with a group ID of 1), and the computers L3 and L4 in the LAN 200 and the remote host R2 outside of the LAN 200 participate in the virtual network N2 (with a group ID of 2). In this example configuration, different VPN connection keys are assigned to the respective combinations of the node ID and the group ID.

Here, authentication information such as a password may be set in addition to the VPN connection key for authentication of participation in the virtual network. The authentication information may be defined for each virtual network or may have a different value for each member within a virtual network. In the latter case, the set authentication information is registered in, for example, the authentication information DB 118 in correlation to the combination of the node ID and the group ID. For example, when a member sends a connection request to a virtual network using the VPN connection key, The VPN server 100 may provide an input screen for the authentication information, and participation in the virtual network is not permitted unless the member inputs valid authentication information to the input screen.

The data structures of the VPN/group ID correlation information DB 120 and the authentication information DB 118 shown in Figs. 3 and 4 are merely exemplary. The information of the DBs can be represented with various representation formats, and any representation format may be employed, so long as similar content can be represented. In addition, the structure with two DBs 118 and 120 is employed merely for simplicity of description.

When the VPN connection controller 112 receives a connection request including the VPN connection key from a user' s computer, the VPN connection controller 112 allows the computer to participate in a VPN indicated by the group ID registered in the authentication information DB 118 in correlation to the VPN connection key. In the example configuration, a host address (virtual IP address) belonging to the virtual network address of the VPN is assigned to the computer so that the computer can participate in the VPN. When the VPN connection controller 112 receives a connection request, the VPN connection controller 112 acquires the real IP address of the computer. The VPN connection controller 112 generates a rule for routing between the computers in the same VPN using the real IP address and the assigned virtual IP address as a VPN routing rule 116 and stores the same in a storage device in the VPN server 100. In the example configuration of Fig. 1 with virtual networks N1 and N2, the VPN routing rule 116 may include the following rules. Rules (1) - (4) relate to packet forwarding in the virtual network N1, rules (5) - (7) relate to packet forwarding in the virtual network N2, and rule (8) relates to an overall routing using the virtual IP address. Rules (9) - (12) relate to routing using the real IP address. In the example configuration, the virtual networks N1 and N2 are the only virtual networks managed by the VPN server 100.
(1) When a source address of a packet is 172.16.1.2 172.16.1.4 4 (virtual IP address in LAN) and a destination address is 172.16.1.5 (virtual IP address of the remote host R1 outside of the LAN), the packet is encapsulated, an IP header having a source address of 11.11.11.11 and a destination address of 22.22.22.22 is attached to the capsule thus obtained, and the encapsulated packet is transmitted to a router (not shown) on a side of the Internet 300. Here, 11.11,11.11 is a global IP address of the NIC af the VPN server 100 on the side of the Internet, and 22.22.22.22 is a global IP address of the NIC of the remote host R1. The encapsulation may be executed, for example, by use of an IPsec protocol.
(2) When a source address of a packet is 172.16.1.3 - 172.16.1.4 or 172.16.1. 5 and a destination address is 172.16.1.2, the packet is encapsulated, an IP header having a source address of 10.0.1.1 and a destination address of 10.0.1.2 is attached to the capsule thus obtained, and the encapsulated packet is forwarded to a network 10.0.1.0/24. Here, 10.0.1.1 is a real IP address of the NIC connected to the network 10.0.1.0/24 among the NICs of the VPN server 100, and 10.0.1.2 is a real IP address of the NIC of the computer L1 in the LAN 200.
(3) When a source address of a packet is 172.16.1.2, 172.16.1.4, or 172.16.1.5 and a destination address is 172.16.1.3, the packet is encapsulated, an IP header having a source address of 10.0.1.1 and a destination address of 10.0.1.3 (real IP address of the server L2) is attached to the capsule thus obtained, and the encapsulated packet is forwarded to the network 10.0.1.0/24.
(4) When a source address of a packet is 172.16.1.2 ~ 172.16.1.3 or 172.16.1.5 and a destination address is 172.16.1.4, the packet is encapsulated, an IP header having a source address of 10.0.2.1 and a destination address of 10.0.2.2 is attached to the capsule thus obtained, and the encapsulated packet is forwarded to a network 10.0.2,0/24. Here, 10.0.2.1 is a real IP address of the NIC connected to the network 10. 0, 2. 0 /24 among the NICs of the VPN server 100, and 10.0, 2. 2 is a real IP address of the NIC of the computer L3 in the LAN 200.
(5) When a source address of a packet is 172.16.2.2 ~ 172.16.2.3 (virtual IP address of a host in the LAN) and a destination address is 172.16.2.4 (virtual IP address of the remote host R2 outside of the LAN), the packet is encapsulated, an IP header having a source address of 11.11.11.11 and a destination address of 33.33.33.33 is attached to the capsule thus obtained, and the encapsulated packet is transmitted to a router (not shown) on the side of the Internet 300. Here, 33.33.33.33 is a global IP address of the NIC of the remote host R2.
(6) When a source address of a packet is 172.16,2.3 or 172.16.2.4 and a destination address is 172.16.2.2, the packet is encapsulated, an IP header having a source address of 10.0.2.1 and a destination address of 10.0.2.2 is attached to the capsule thus obtained, and the encapsulated packet is forwarded to the network 10.0.2.0/24.
(7) When a source address of a packet is 172.16.2.2 or 172.16.2.4 and a destination address is 172.16.2.3, the packet is encapsulated, an IP header having a source address of 10. 0. 2. 1 and a destination address of 10.0.2.2 is attached to the capsule thus obtained, and the encapsulated packet is forwarded to the network 10.0.2.0/24.
(8) When one of a source and a destination of a packet is a virtual IP address and the pair consisting of the source and the destination does not match any of the rules (1) - (7), the packet is discarded (dropped). Because the VPN server 100 has information of virtual IP addresses assigned by the VPN server 100, the determination of whether or not the source or destination IP address is a virtual IP address can be made by reference to this information.
(9) When a source address of a packet is 22.22.22.22 and a destination address is 11.11.11.11, the packet is decapsulated and the rules (1) - (8) are applied to the source and destination addresses of the IP header of the original packet (VPN packet) obtained by the decapsulation.
(10) When a source address of a packet is 10.0.1.2 2 or 1.0. 0. 1 . 2 and a destination address is 10.0.1.1, the packet is decapsulated and the rules (1) - (8) are applied to the source and destination addresses of the IP header of the original packet obtained by the decapsulation.
(11) When a source address of a packet is 10.0.2.2 or 10.0.2.3 and a destination address is 10.0.2.1, the packet is decapsulated and the rules (1) - (8) are applied to the source and destination addresses of the IP header of the original packet obtained by the decapsulation.
(12) When both a source and a destination of a packet are real IP addresses and a pair consisting of the source and the destination fail to match any of the rules (9) - (11), the packet is routed to the destination.

The routing controller 114 executes packet routing over the virtual network by reference to such VPN routing rules 116.

The rules (1) - (12) exemplified above are for an example case in which the VPN client application provided in each of the hosts L1 - L6, R1, and R2 encapsulates the VPN packet generated in the host (in the example configuration, packet destined for a virtual IP address), transmits the same through the internet 300 or LAN 200, and transmits the same to the VPN server 100 (in other words, VPN tunneling).

The rules (1) - (8) exemplified above relate to a VPN packet, and are based on an idea that, when a source and a destination of a VPN packet belong to the same virtual network, the packet is forwarded and otherwise the packet is discarded. In other words, these rules are representations as individual and concrete rules of the idea using the virtual IP addresses assigned to the hosts, In these rules, the packet is forwarded when the network address portions of the virtual IP addresses of the source and the destination of the packet are the same. As can be understood by a person with ordinary skill in the art, however, a general rule that "a packet is forwarded when network address portions of virtual IP addresses of a source and a destination of a packet are the same and otherwise the packet is to be discarded" can be employed in place of the rules explicitly showing the virtual IP addresses of the source and the destination as in the rules (1) - (8). The general rule is merely an example under a framework that virtual IP addresses belonging to a virtual network address assigned to a virtual network are assigned to the hosts belonging to the same virtual network. In principle, so long as it is possible to determine whether or not the source and the destination belong to the same virtual network, any rule or method may be used. For example, a virtual IP address of each host belonging to a virtual network may be stored in the VPN server 100 in correlation to a group ID of the virtual network. In this case, by determining, from the stored information, whether or not the virtual IP addresses of the source and the destination of the VPN packet correspond to the same group ID, it is possible to determine whether or not the source and the destination belong to the same virtual network. Alternatively, the virtual network address assigned to the virtual network may be used as the group ID for identifying the virtual network.

In the above description, there is described an example configuration in which the hosts L1 - L6 in the LAN 200 have a VPN tunneling function, but this is not necessarily the case. Even when the hosts L1 - L6 in the LAN 200 do not have the VPN tunneling function, virtual IP addresses may be added to the NICs of the hosts L1 - L6 through methods such as an IP alias so that the VPN packet can be routed in the LAN 200 without being encapsulated.

The VPN routing rule and routing process described above are merely exemplary. Other methods for assigning a virtual IP address to each host participating in a virtual network and routing using the virtual IP address are available in prior arts. Alternatively, these other methods may be employed in the exemplary embodiment.

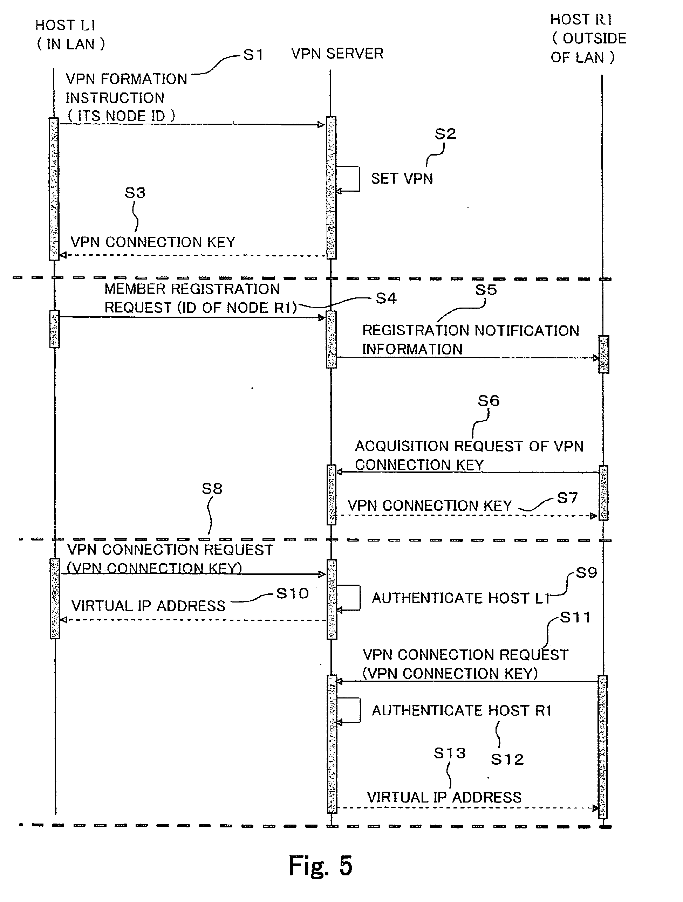

Next, a concrete example of a process through the formation of the virtual network (VPN) will be described with reference to Fig. 5. In this example configuration, there will be schematically described a flow, from a state in which the virtual network N1 is not present in the example network structure of Fig. 1, through formation of the virtual network N1 by an instruction from a VPN client application of the host L1 in the LAN 200 (hereinafter referred simply as "host L1" when there is no ambiguity, for the sake of simplicity).

First, the host L1 generates a VPN formation instruction in response to an instruction from a user and sends the instruction to the VPN server 100 (S1). The VPN formation instruction includes a node ID of the host L1. Here, the node ID of the host L1 may be generated by the VPN client application of the host L1 by reference to information of hardware elements of the host L1 and stored as setting information. When an electronic mail address of the user is to be used as the node ID, the VPN client application may allow the user to set the electronic mail address to be used as the node ID and store the value as the setting information.

Upon receipt of the VPN formation instruction, the VPN server 100 sets the virtual network (VPN) N1 corresponding to the instruction, by means of the VPN setting unit 106 (S2). More specifically, the VPN server 100 assigns a group ID ("1" in the example of Figs. 1 and 4) and virtual network addresses (172.16.1.0/24 in the example of Fig. 1) for the virtual network and registers a pair consisting of the group ID and the virtual network address in the VPN/group ID correlation information DB 120. In addition, the VPN server 100 assigns to the host L1 a virtual IP address in the virtual network (172.16.1.2 in the example of Fig. 1) and generates a VPN connection key. The VPN server 100 transmits the virtual IP address and the VPN connection key to the host L1 along with the group ID of the virtual network (S3). The host L1 stores the received virtual IP address, VPN connection key, and group ID, for use in the subsequent processes. The VPN server 100 registers the VPN connection key in the authentication information DB 118 in correlation to a pair consisting of the node ID of the host L1 and the group ID assigned to the virtual network N1.

A user instructing formation of the VPN operates the host L1 to request registration of a member for the virtual network N1 (S4). As described above, the designation of the member may be executed by means of selection from a list. The registration request transmitted from the host L1 to the VPN server 100 may include, for example, the node ID representing the host L1, the group ID representing the virtual network N1, and information for identifying the selected member (that is, a node ID of the member or information correlated to the node ID). In the illustrated example, the remote host R1 is selected as a member. Alternatively, the VPN connection key received in step S3 may be included in the registration request in place of the pair consisting of the node ID and the group ID. Alternatively, it is also possible to employ a configuration in which the VPN connection key is included in the registration request in addition to the node ID and the group ID, the VPN server 100 checks whether or not the group consisting of the node ID, group ID, and VPN connection key is a valid combination registered in the authentication information DB 118, and the VPN server 100 accepts the registration request when the VPN server 100 determines that the combination is a valid combination.

Upon receiving the member registration request, the VPN server 100 assigns a virtual IP address in the virtual network N1 to the member designated in the request and generates a VPN connection key corresponding to the member. The virtual IP address and the VPN connection key are stored in the authentication information DB 118 in correlation to a pair consisting of the node ID of the member and the group ID of the virtual network N1. The VPN server 100 then generates registration notification information correlated to the pair of the node ID and the group ID and transmits the registration notification information to the member (in this example configuration, the remote host R1) (S5) . The registration notification information may include a URL of a webpage (which is generated by the VPN server 100) for acquiring the VPN connection key. The registration notification information may be transmitted to the user of the host R1 via an electronic mail. Alternatively, the registration notification information may be transmitted to the host R1 through a protocol corresponding to the VPN client application of the host R1.

When a user of the host R1 receiving the registration notification information requests acquisition of the VPN connection key using the registration notification information (S6), the VPN server 100 returns the VPN connection key (S7). For example, when the user clicks the URL shown in the electronic mail of the registration notification information, the host R1 transmits to the VPN server 100 an HTTP (HyperText Transfer Protocol) request requesting the webpage corresponding to the URL and acquires the webpage. The webpage includes, for example, a button for acquisition instruction of the VPN connection key. The button includes identification information which identifies the VPN connection key issued for the member. After the user acquires the webpage, the user presses the button displayed on the computer screen through a click operation or the like so that the computer transmits to the VPN server 100 a connection key acquisition request including the identification information, and the VPN connection key is acquired. Alternatively, the information of the VPN connection key may be included in the webpage corresponding to the URL shown in the registration notification information.

When the registration notification information is provided to the host R1 through a unique protocol corresponding to the VPN client application, the VPN client application provides a user interface screen for acquisition instruction of the VPN connection key. When the user instructs acquisition by means of the screen, the application sends to the VPN server 100 an acquisition request including identification information included in the registration notification information. The VPN server 100 returns the VPN connection key in response to this request. Alternatively, the VPN connection key may be included in the registration notification information transmitted to the host R1 in step S5.

Although Fig. 5 exemplifies a case in which the VPN connection key is distributed only to the host R1, the VPN connection keys are similarly distributed to hosts L2 and L3. In this manner, the VPN connection keys corresponding to the virtual network N1 are distributed to the members. Each member can participate in the virtual network N1 by presenting the VPN connection key to the VPN server 100 to thereby request connection.

In the example configuration of Fig. 5, first, the host L1 sends a VPN connection request to the VPN server 100 (S8). The VPN connection request includes the VPN connection key acquired by the host L1 in step S3. Alternatively, the node ID of the host L1 and the group ID of the virtual network N1 may be included in the VPN connection request.

Upon receiving the VPN connection request from the host L1, the VPN server 100 authenticates the host L1 (S9). In the authentication, a determination is made as to whether or not the VPN connection key included in the VPN connection request is a valid key having been issued by the VPN server 100 in the past. Alternatively, it is also possible to employ a configuration in which authentication information of each host (or its user) is registered in advance in the VPN server 100 in correlation to the VPN connection key (or a pair consisting of the node ID and the group ID) and the VPN server 100 asks the host L1 to present the authentication information for the host issuing the VPN connection request. In this case, when valid authentication information corresponding to the VPN connection key is presented by the host, the request is determined as a valid request from the host. Alternatively or in addition to such authentication, when the node ID and the group ID are included in the VPN connection request in addition to the VPN connection key, a determination may be made as to whether or not the group consisting of the three values matches the combination registered in the authentication information DB 118. When the combinations match, the request may be determined as a valid request from the host L1.

When the VPN server 100 determines that the VPN connection request in step S8 is a valid request from the host L1, the VPN server 100 provides to the host L1 a virtual IP address belonging to the network address of the virtual network N1 (S10). The VPN server 100 also sets the VPN routing rule 116 in accordance with the virtual IP address provided to the host L1 so that packets having the virtual IP address as a source or a destination can be correctly routed. Because the VPN connection request from the host L1 includes information of the real IP address of the host L1, a routing rule can be set on the basis of provided virtual IP address and the information of the real IP address so that a packet destined for the virtual IP address reaches the host L1. Upon receiving the virtual IP address, the host L1 executes various setting processes so that the host L1 can receive a packet destined for the virtual IP address. With this process, the host L1 participates in the virtual network N1.

Similarly, when the host R1 transmits a VPN connection request including the VPN connection key or the like to the VPN server 100 (S11), the VPN server 100 authenticates the host R1 (S12). When the authentication is successful, the VPN server 100 provides to the host R1 a virtual IP address unique in the virtual network N1 (S13). The VPN server 100 also sets a VPN routing rule 116 according to the virtual IP address. Upon receiving the virtual IP address, the host R1 executes various setting processes in order to receive a packet destined for the virtual IP address. With this process, the host R1 participates in the virtual network N1.

Although in the example configuration of Fig. 5, a process in which only the hosts L1 and R1 participate in the virtual network N1 is exemplified, the hosts L2 and L3 can participate in the virtual network N1 in a similar manner. The members participating in the virtual network N1 communicate with each other using the virtual IP addresses in the virtual network N1. The VPN server 100 may generate a correspondence table for determining a virtual IP address of a host on the basis of the host name or the node ID of the host and provide a name server function for the hosts by reference to the correspondence table.

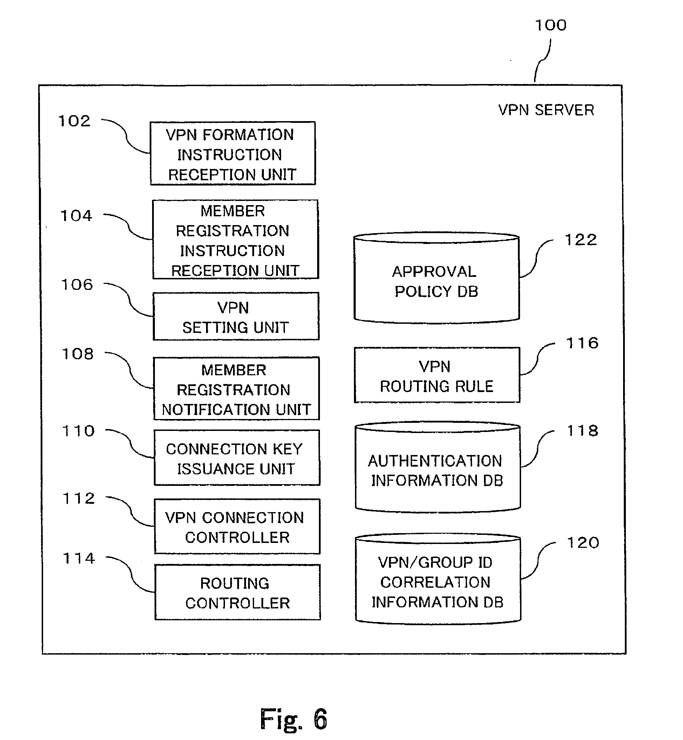

An alternative exemplary embodiment of the above-described exemplary embodiment will now be described with reference to Figs. 6 - 9. In the above-described exemplary embodiment, the VPN server 100 receiving the VPN connection request from the host (S8 or S11) permits the host to participate in the virtual network when the VPN connection key included in the request is valid. In the alternative exemplary embodiment described below, on the other hand, an approval of an administrator of the virtual network is further required for permitting participation to the virtual network. In the alternative exemplary embodiment, the user instructing formation of the virtual network (S1) is assumed to be the administrator of the virtual network. The administrator of the virtual network may be allowed to grant authority as an administrator of the virtual network to one or more of the members invited to the virtual network. In this case, multiple administrators may be present for one virtual network. The administrator thus added may be given an authority to register a member in the virtual network (S5).

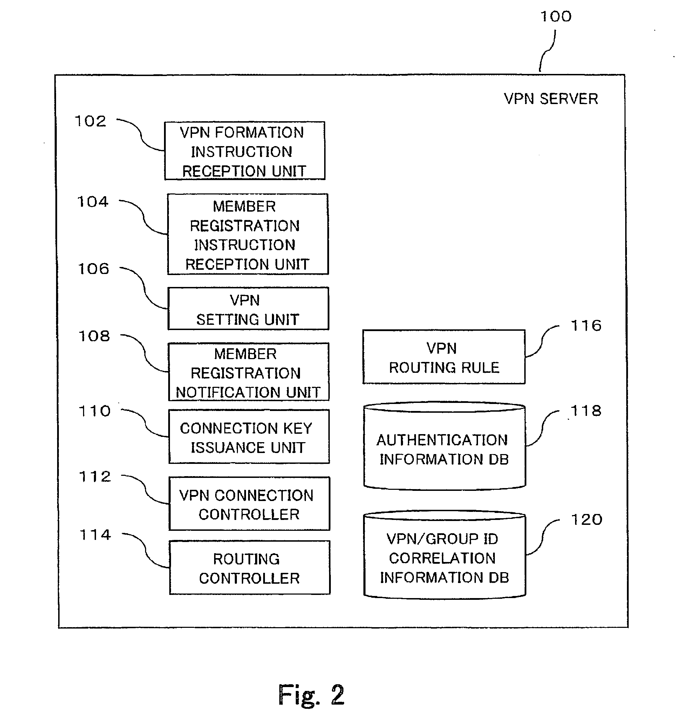

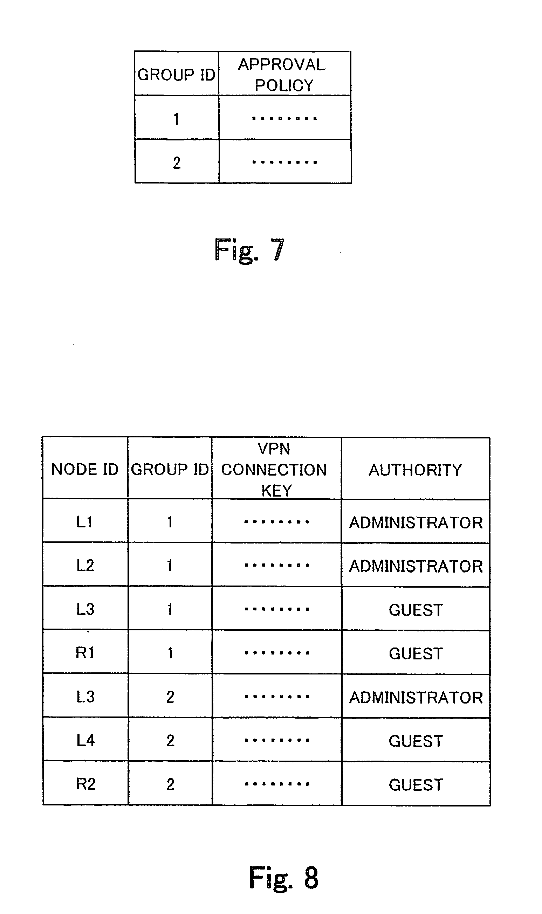

The VPN server 100 in this alternative exemplary embodiment is similar to the VPN server 100 of the above-described exemplary embodiment shown in Fig. 2 with the addition of an approval policy DB 122 (refer to Fig. 6). As shown in Fig. 7, the approval policy DB 122 stores approval policy information in correlation to the group ID of each virtual network.

The approval policy information of the virtual network is information which defines, when approval for participation in a virtual network is requested to the administrator of the virtual network, the value of the response. For example, there may be considered a policy in which, when multiple administrators are present for one virtual network, participation is permitted only when all of the administrators approve the participation. There may be considered another policy in which participation is permitted upon approval by a predetermined number of (for example, one or more) administrators among the administrators corresponding to the virtual network. Such an approval policy may be defined for each virtual network. The VPN server 100 may provide a user interface screen showing a selection of the approval policy to the administrators of the virtual network, receive a selection of the approval policy to be applied to the virtual network from the administrators, and register the selected policy in the approval policy DB 122 in correlation to the group ID of the virtual network.

In this alternative exemplary embodiment, as shown in Fig. 8, an authority of each member is registered in the authentication information DB 118 in correlation to a combination of the group ID and the node ID of the member. In the illustrated configuration, the authority includes two types; "administrator" and "guest." The "administrator" is the administrator of the virtual network corresponding to the group ID and has an approval authority for a participation request from a member having a "guest" authority. The "guest" is a general user, and must be approved by the "administrator" in order to participate in the virtual network.

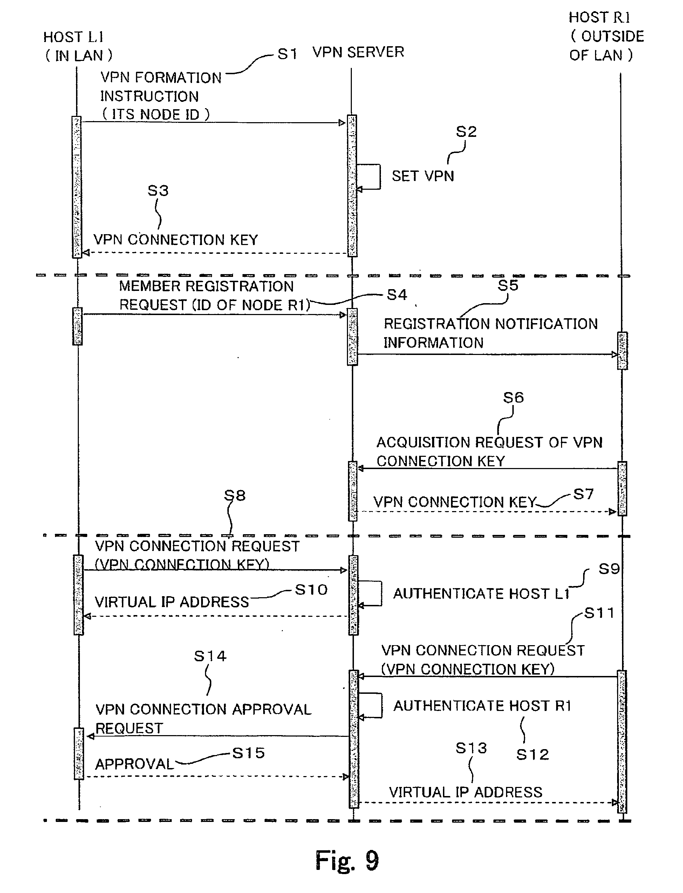

A process of formation of the virtual network in the alternative exemplary embodiment will now be described with reference to Fig. 9. This process is similar to the process of the above-described exemplary embodiment shown in Fig. 5, with steps S14 - S15 added. Thus, steps S1 - S10 may be similar to those described above.

In the alternative exemplary embodiment, upon receiving from a member a VPN connection request including a VPN connection key, the VPN connection controller 112 determines, from the authentication information DB 118, authority of the member registered in the authentication information DB 118 in correlation to the VPN connection key. When the determined authority is "administrator" and authentication for the member is successful, a virtual IP address is issued to the member and the participation of the member in the virtual network is permitted. The connection request from the host L1 shown in steps S8 - S10 is one example of this process, On the other hand, when the authority of the member sending the VPN connection request is "guest," the VPN connection controller 112 authenticates the member (S12), and, when the authentication is successful, the VPN connection controller 112 sends to the administrators of the virtual network an approval request to inquire whether or not the participation of the member is to be approved (S14), In the illustrated configuration of Fig. 9, in response to a connection request to the virtual network N1 from the host R1 having a "guest" authority (S11), the VPN server 100 sends an approval request to the host L1 which is an administrator of the virtual network N1 (S14). The approval request includes information indicating which member is requesting participation to which virtual network. The approval request sent by the VPN connection controller 112 to the administrator may, for example, include a URL of a webpage displaying an input button for inputting whether or not the participation is to be approved. In response to the approval request, the administrator inputs a response of whether or not the participation is to be approved. The response is then transmitted from the computer of the administrator to the VPN connection controller 112 (S15). When the responses from the administrators corresponding to the virtual network satisfy the approval policy corresponding to the virtual network, the VPN connection controller 112 provides a virtual IP address to the member sending the VPN connection request, and permits participation in the virtual network (S13). When, for example, the approval policy of the virtual network is such that participation is permitted only when all administrators approve, the VPN connection controller 112 permits participation by the member when an approval is obtained from all administrators of the virtual network.

In a configuration in which the user sending the formation instruction of the virtual network is the sole administrator of the virtual network, the approval policy is not required, and the determination of whether or not participation of the member is permitted can be made by reference to a response from the administrator.

In the above-described exemplary embodiment and alternative exemplary embodiment, the VPN server 100 transmits the registration notification information individually to each registered member and each member acquires a VPN connection key by reference to the registration notification information. This process, however, is merely exemplary, and, alternatively, it is also possible to employ a configuration in which each VPN connection key corresponding to each member registered by the member registration request (S4) is provided from the VPN server 100 to the host requesting the registration and the host distributes the VPN connection keys to the members (for example, through electronic mail).

In the above description, there is exemplified a case in which a virtual network is formed between the remote host R1 and the LAN 200, but the present invention is not limited to such a configuration, and a virtual network can be similarly formed between hosts of two or more LANs managed by respective VPN servers 100.

In addition, in the above description, one VPN server 100 having both a router function and a VPN connection control function is used, but the present invention is not limited to such a configuration, and there may be employed a configuration in which the VPN server 100 is replaced with a combination of a VPN connection controlling device which executes a VPN routing as described above and a router which executes a normal IP routing and a similar control is realized.

Moreover, in the above description, a virtual IP address on the virtual network is assigned to the member of the virtual network, but the present invention does not require this configuration. For example, when there is no overlap in the real TP addresses of the hosts which are members of the virtual network, the VPN server 100 may store the real IP addresses of the members in correlation to the group ID of the virtual network. Upon receiving a VPN packet, the VPN server 100 may determine that a source and a destination belong to the same virtual network when the IP addresses of the source and the destination are correlated to the same group ID.

When a member is to be added to a virtual network which has already been formed, in the above-described system, for example, a person instructing formation of the virtual network or an administrator designated by this person may instruct the VPN server 100 to register the member to be added. In response to the instruction, the VPN server 100 transmits registration notification information to the additional member, and the additional member acquires a VPN connection key by reference to the registration notification information and participates in the virtual network by means of the key.

There may be cases where a mobile terminal participating in the virtual network from a certain LAN moves and attempts to participate in the same virtual network from another LAN. In this case, because the mobile terminal in the above-described system already has the VPN connection key for the virtual network before the movement, the mobile terminal can present the key to the VPN server 100 after the movement.

When a member of a virtual network which is already formed is to be deleted, in the above-described system, an entry (in particular, the VPN connection key) corresponding to a combination of the node ID of the member and the group ID of the virtual network may be deleted (or invalidated) in the authentication information DB 118 (refer to Fig. 4 or Fig. 8) indicating the structure of the virtual network. Even when the deleted member requests participation in the virtual network by presenting the old VPN connection key to the VPN server 100, because the VPN connection key is already invalidated, the request will not he permitted.

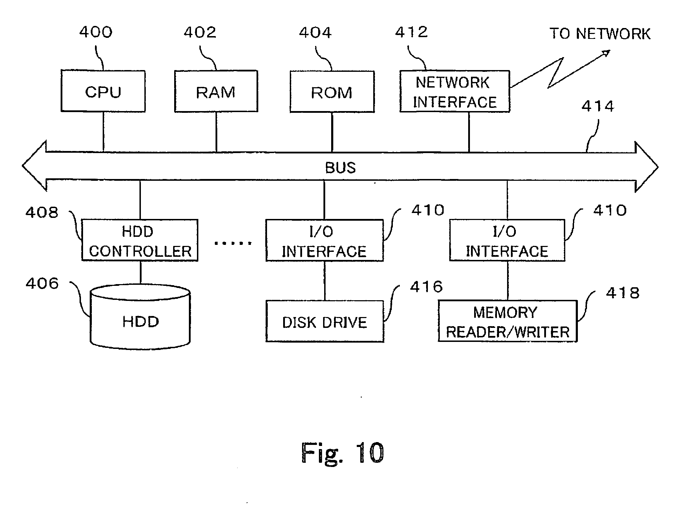

The VPN server 100 of the above-described exemplary embodiments is typically realized by, for example, executing a program describing the processes of the function modules on a general-purpose computer. As shown in Fig. 10, the computer may have, as hardware, a circuit structure in which a microprocessor such as a CPU 400, a memory (primary storage) such as a random access memory (RAM) 402 and a read-only memory (ROM) 404, an HDD controller 408 which controls an HDD (Hard Disk Drive) 406, various I/O (input/output) interfaces 410, a network interface 412 which controls connection with a network such as the local area network etc., are connected via a bus 414. A disk drive 416 for reading from and/or writing to transportable disk recording media such as a CD and a DVD or a memory reader/writer 418 for reading from and/or writing to transportable nonvolatile recording media of various standards such as a flash memory may be connected, for example, through the I/O interface 410 to the bus 414. A program describing processes of the above-described exemplary embodiment or alternative exemplary embodiment is stored in a fixed storage device such as the hard disk drive through a recording medium such as the CD and DVD or through a communication unit such as a network and is installed in the VPN server. The processes of the above-described exemplary embodiment or alternative exemplary embodiment are realized by the program stored in the fixed storage device read into the RAM 402 and executed by the microprocessor such as the CPU 400.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with various modifications as are suited to the particular use contemplated. It is intended that the scope of the invention be defined by the following claims and their equivalents.

## Claims

1. A virtual network connection apparatus (100) for providing virtual network connections among information processors (L1-L6, R1, R2), such that
the virtual network connection apparatus (100) comprises:
a formation instruction reception unit (102) that is adapted to receive a formation instruction for forming a virtual network;
an identifier assignment unit (106) that is adapted to assign a unique virtual network identifier in response to the formation instruction received by the formation instruction reception unit;
a designation reception unit (104) that is adapted to receive a designation of an information processor (L1-L6, R1, R2) which forms a part of the virtual network;
a first registration unit (110) that is adapted to issue connection permission information for an information processor which is designated to the designation reception unit and is adapted to register the issued connection permission information in a first storage unit (116) in correlation to the virtual network identifier assigned by the identifier assignment unit;
a correlation processor (112) that is adapted to determine, upon receipt of a connection request including the connection permission information from an information processor, a virtual network identifier correlated to the connection permission information by reference to the first storage unit and is adapted to execute a process to correlate an address of the information processor to the determined virtual network identifier; and
a transmission controller (114) that is adapted to determine, upon receipt of transmitted information including a source address and a destination address from an information processor, a virtual network identifier correlated to the source address and a virtual network identifier correlated to the destination address, and is adapted to execute a control to transmit the transmitted information to the destination address by reference to the determined virtual network identifier correlated to the source address and the determined virtual network identifier correlated to the destination address.

2. The virtual network connection apparatus according to Claim 1, further comprising:
a second storage unit (118) that is adapted to store one or more approval party addresses in correlation to the virtual network identifier, wherein
the correlation processor is adapted to determine, upon receipt of the connection request including the connection permission information from an information processor, an approval party address correlated to the virtual network identifier corresponding to the connection permission information by reference to the second storage unit, is adapted to inquire the determined approval party address as to whether or not a connection from the information processor is to be approved, and, based on a response to the inquiry, is adapted to determine whether or not an address of the information processor is to be correlated to the virtual network identifier.

3. The virtual network connection apparatus according to Claim 2, further comprising:
a third storage unit (122) that is adapted to store, for each virtual network identifier, an approval rule for determining whether or not an address of the information processor is to be correlated to the virtual network identifier, based on a response from each approval party address correlating to the virtual network identifier, wherein
the correlation processor is adapted to determine whether or not the address of the information processor is to be correlated to the virtual network identifier based on a response from each approval party address correlated to the virtual network identifier corresponding to the connection permission information included in the connection request and the approval rule correlated to the virtual network identifier.

4. The virtual network connection apparatus according to Claim 1, further comprising:
a notification transmission unit (108) that is adapted to transmit, to the information processor, notification information correlated to connection permission information issued by the first registration unit.

5. A program which, when executed, causes a computer to function for providing virtual network connection among information processors (L1-L6, R1,R2), such that the program, when executed, causes the computer to function as:
a formation instruction reception unit (102) that is adapted to receive a formation instruction for forming a virtual network;
an identifier assignment unit (106) that is adapted to assign a unique virtual network identifier in response to the formation instruction received by the formation instruction reception unit;
a designation reception unit (104) that is adapted to receive a designation of an information processor (L1-L6, R1, R2) which forms a part of the virtual network;
a first registration unit (110) that is adapted to issue connection permission information for an information processor which is designated to the designation reception unit and is adapted to register the issued connection permission information in a first storage unit (116) in correlation to the virtual network identifier assigned by the identifier assignment unit;
a correlation processor (112) that is adapted to determine, upon receipt of a connection request including the connection permission information from an information processor, a virtual network identifier correlated to the connection permission information by reference to the first storage unit and is adapted to execute a process to correlate an address of the information processor to the determined virtual network identifier; and
a transmission controller (114) that is adapted to determine, upon receipt of transmitted information including a source address and a destination address from an information processor, a virtual network identifier correlated to the source address and a virtual network identifier correlated to the destination address, and is adapted to execute a control to transmit the transmitted information to the destination address by reference to the determined virtual network identifier correlated to the source address and the determined virtual network identifier correlated to the destination address.

6. The program according to Claim 5, which, when executed, further causes the computer to function as:
a second storage unit (118) that is adapted to store one or more approval party addresses in correlation to the virtual network identifier, wherein
the correlation processor is adapted to determine, upon receipt of the connection request including the connection permission information from an information processor, an approval party address correlated to the virtual network identifier corresponding to the connection permission information by reference to the second storage unit, is adapted to inquire the determined approval party address as to whether or not a connection from the information processor is to be approved, and, based on a response to the inquiry, is adapted to determine whether or not an address of the information processor is to be correlated to the virtual network identifier.

7. The program according to Claim 6, which, when executed, further causes the computer to function as:
a third storage unit (122) that is adapted to store, for each virtual network identifier, an approval rule for determining whether or not an address of the information processor is to be correlated to the virtual network identifier, based on a response from each approval party address correlating to the virtual network identifier, wherein
the correlation processor is adapted to determine whether or not the address of the information processor is to be correlated to the virtual network identifier based on a response from each approval party address correlated to the virtual network identifier corresponding to the connection permission information included in the connection request and the approval rule correlated to the virtual network identifier.

8. The program according to Claim 5, which, when executed, further causes the computer to function as:
a notification transmission unit (108) that is adapted to transmit, to the information processor, notification information correlated to connection permission information issued by the first registration unit.

9. A virtual network system comprising:
a virtual network connection apparatus (100) for providing virtual network connections among information processors (L1-L6, R1, R2); and
one or more information processors, such that
the virtual network connection apparatus (100) comprises:
a formation instruction reception unit (102) that is adapted to receive a formation instruction for forming a virtual network;
an identifier assignment unit (106) that is adapted to assign a unique virtual network identifier in response to the formation instruction received by the formation instruction reception unit;
a designation reception unit (104) that is adapted to receive a designation of an information processor (L1-L6, R1, R2) which forms a part of the virtual network;
a first registration unit (110) that is adapted to issue connection permission information for an information processor which is designated to the designation reception unit and is adapted to register the issued connection permission information in a first storage unit (116) in correlation to the virtual network identifier assigned by the identifier assignment unit;
a correlation processor (112) that is adapted to determine, upon receipt of a connection request including the connection permission information from an information processor, a virtual network identifier correlated to the connection permission information by reference to the first storage unit and is adapted to execute a process to correlate an address of the information processor to the determined virtual network identifier; and
a transmission controller (114) that is adapted to determine, upon receipt of transmitted information including a source address and a destination address from an information processor, a virtual network identifier correlated to the source address and a virtual network identifier correlated to the destination address, and is adapted to execute a control to transmit the transmitted information to the destination address by reference to the determined virtual network identifier correlated to the source address and the determined virtual network identifier correlated to the destination address; and
the information processor comprises:
a unit that is adapted to transmit to the virtual network connection apparatus a connection request including the connection permission information; and
a unit that is adapted to transmit transmitted information including a source address and a destination address.

10. A method for controlling connection of a virtual network for providing virtual network connections along information processors (L1-L6, R1, R2), such that the method comprises the steps of:
(a) receiving a formation instruction for forming a virtual network;
(b) assigning a unique virtual network identifier in response to the received formation instruction;
(c) receiving a designation of an information processor (L1-L6, R1, R2) which forms a part of the virtual network;
(d) issuing connection permission information for the designated information processor and registering the issued connection permission information in a first storage unit (116) in correlation to the assigned virtual network identifier;
(e) determining, upon receipt of a connection request including the connection permission information from an information processor, a virtual network identifier correlated to the connection permission information by reference to the first storage unit (116) and executing a process to correlate an address of the information processor to the determined virtual network identifier; and
(f) determining, upon receipt of transmitted information including a source address and a destination address from an information processor, a virtual network identifier correlated to the source address and a virtual network identifier correlated to the destination address, and executing a control to transmit the transmitted information to the destination address based on the determined virtual network identifier correlated to the source address and the determined virtual network identifier correlated to the destination address.

11. The method according to Claim 10, further comprising:
(g) a step of storing one or more approval party addresses to a second storage unit (118) in correlation to the virtual network identifier, wherein
the step (e) includes a step of determining, upon receipt of the connection request including the connection permission information from an information processor, an approval party address correlated to the virtual network identifier corresponding to the connection permission information by reference to the second storage unit (118), inquiring the determined approval party address as to whether or not a connection from the information processor is to be approved, and, based on a response to the inquiry, determining whether or not an address of the information processor is to be correlated to the virtual network identifier.

12. The method according to Claim 11, further comprising:
(h) a step of storing, for each virtual network identifier, an approval rule for determining whether or not an address of the information processor is to be correlated to the virtual network identifier, based on a response from each approval party address correlating to the virtual network identifier, wherein
the step (e) includes a step of determining whether or not the address of the information processor is to be correlated to the virtual network identifier based on a response from each approval party address correlated to the virtual network identifier corresponding to the connection permission information included in the connection request and the approval rule correlated to the virtual network identifier.

13. The method according to Claim 10, further comprising:
(i) a step of transmitting, to the information processor, notification information correlated to connection permission information issued in the step (d).

## Patentansprüche

1. Ein Gerät zur virtuellen Netzwerkverbindung (100) zum Bereitstellen von virtuellen Netzwerkverbindungen zwischen Informationsprozessoren (L1-L6, R1,R2), wobei das Gerät zur virtuellen Netzwerkverbindung (100) umfasst:
Eine Empfangseinheit für Formationsbefehle (102), die geeignet ist, einen Formationsbefehl zur Bildung eines virtuellen Netzwerks zu empfangen;
eine Einheit zur Zuweisung eines Identifikators (106), die geeignet ist, einen eindeutigen virtuellen Netzwerkidentifikator als Rückmeldung auf einen Formationsbefehl, der von der Empfangseinheit für Formationsbefehle empfangen worden ist, zuzuweisen;
eine Empfangseinheit für Kennzeichnungen (104), die geeignet ist, die Kennzeichnung eines Informationsprozessors (L1-L6, R1,R2), der einen Teil des virtuellen Netzwerks bildet, zu empfangen;
eine erste Registrierungseinheit (110), die geeignet ist, einem Informationsprozessor eine Information betreffend die Genehmigung einer Verbindung zu erteilen, wobei der Informationsprozessor für die Empfangseinheit für Kennzeichnungen vorgesehen und geeignet ist, die erteilte Information betreffend die Genehmigung der Verbindung in einer ersten Speichereinheit (116) in Korrelation zu dem virtuellen Netzwerkidentifikator, der durch die Einheit zur Zuweisung eines Identifikators zugeteilt ist, zu registrieren;
einen Korrelationsprozessor (112), der geeignet ist, nach dem Empfang einer Verbindungsanfrage einschließlich der Information betreffend die Zulassung einer Verbindung von einem Informationsprozessor einen virtuellen Netzwerkidentifikator festzulegen, der mit der Information zur Genehmigung der Verbindung unter Bezugnahme auf die erste Speichereinheit korreliert, und der geeignet ist, einen Prozess zur Korrelation einer Adresse aus dem Informationsprozessor mit dem festgelegten virtuellen Netzwerkidentifikator auszuführen; und
einen Übertragungskontroller (114), der geeignet ist - nach Erhalt einer übertragenen Information einschließlich einer Herkunftsadresse und einer Zieladresse von einem Informationsprozessor -, einen virtuellen Netzwerkidentifikator festzulegen, der mit der Zieladresse korreliert, und der geeignet ist, eine Kontrolle auszuüben, um die übertragene Information zur Zieladresse unter Bezugnahme auf den festgelegten virtuellen Netzwerkidentifikator, der mit der Herkunftsadresse korreliert, und den festgelegten virtuellen Netzwerkidentifikator, der mit der Zieladresse korreliert, zu übertragen.

2. Das Gerät zur virtuellen Netzwerkverbindung gemäß Anspruch 1, weiterhin umfassend:
eine zweite Speichereinheit (118), die geeignet ist, eine freigegebene Teilnehmeradresse oder mehrere freigegebene Teilnehmeradressen in Korrelation mit dem virtuellen Netzwerkidentifikator zu speichern, wobei
der Korrelationsprozessor geeignet ist, nach Empfang der Verbindungsanfrage einschließlich der Information zur Genehmigung der Verbindung von einem Informationsprozessor eine freigegebene Teilnehmeradresse festzulegen, die mit dem virtuellen Netzwerkidentifikator entsprechend der Information zur Genehmigung der Verbindung unter Bezugnahme auf die zweite Speichereinheit korreliert, und der geeignet ist, die festgelegte freigegebene Teilnehmeradresse daraufhin zu abzufragen, ob eine Verbindung von dem Informationsprozessor genehmigt werden soll oder nicht, und, basierend auf der Rückmeldung zu dieser Abfrage, geeignet ist, festzustellen, ob eine Adresse aus dem Informationsprozessor mit dem virtuellen Netzwerkidentifikator korreliert werden soll oder nicht.

3. Das Gerät zur virtuellen Netzwerkverbindung gemäß Anspruch 2, weiterhin umfassend:
Eine dritte Speichereinheit (122), die geeignet ist, für jeden virtuellen Netzwerkidentifikator eine Freigaberegel für die Festlegung zu speichern, ob eine Adresse aus dem Informationsprozessosr mit dem virtuellen Netzwerkidentifikator korreliert werden soll oder nicht, basierend auf einer Rückmeldung von jeder freigegebenen Teilnehmeradresse, die mit dem virtuellen Netzwerkidentifikator korreliert, wobei
der Korrelationsprozessor geeignet ist zu bestimmen, ob die Adresse aus dem Informationsprozessor mit dem virtuellen Netzwerkidentifikator korreliert werden soll oder nicht, basierend auf einer Rückmeldung von jeder freigegebenen Teilnehmeradresse, die mit dem virtuellen Netzwerkidentifikator entsprechend der Information zur Genehmigung der Verbindung, die in der Verbindungsanfrage und in der mit dem virtuellen Netzwerkidentifikator korrelierenden Freigaberegel enthalten ist, korreliert.

4. Das Gerät zur virtuellen Netzwerkverbindung gemäß Anspruch 1, weiterhin umfassend:
eine Notifikations-Übertragungs-Einheit (108), die geeignet ist, an den Informationsprozessor eine Notifikationsinformation zu übersenden, die mit der von der ersten Registrierungseinheit erteilten Information zur Genehmigung der Verbindung, korreliert.

5. Ein Programm, das bei Ausführung einen Computer veranlasst, für die Bereitstellung von virtuellen Netzwerkverbindungen zwischen Informationsprozessoren (L1-L6, R1, R2) zu sorgen, wobei das Programm den Computer bei der Ausführung veranlasst zu funktionieren als:
eine Empfangseinheit für Formationsbefehle (102), die geeignet ist, einen Formationsbefehl zur Bildung eines virtuellen Netzwerks zu empfangen;
eine Einheit zur Zuweisung eines Indentifikators (106), die geeignet ist, einen eindeutigen virtuellen Netzwerkidentifikator als Rückmeldung auf den von der Empfangseinheit für Formationsbefehle empfangenen Formationsbefehl zuzuweisen;
eine Empfangseinheit für Kennzeichnungen (104), die geeignet ist, eine Kennzeichnung eines Informationsprozessors (L1-L6, R1, R2), der einen Teil des virtuellen Netzwerks bildet, zu empfangen;
eine erste Registrierungseinheit (110), die geeignet ist, einem Informationsprozessor eine Information betreffend die Genehmigung einer Verbindung zu erteilen, wobei der Informationsprozessor für die Empfangseinheit für Kennzeichnungen vorgesehen und geeignet ist, die erteilte Information betreffend die Genehmigung der Verbindung in einer ersten Speichereinheit (116) in Korrelation zu dem virtuellen Netzwerkidentifikator, der durch die Einheit zur Zuweisung eines Identifikators zugeteilt ist, zu registrieren;
einen Korrelationsprozessor (112), der geeignet ist, nach Erhalt einer Verbindungsanfrage einschließlich der Information betreffend die Genehmigung der Verbindung von einem Informationsprozessor einen virtuellen Netzwerkidentifikator festzulegen, der mit der Information zur Genehmigung der Verbindung unter Bezugnahme auf die erste Speichereinheit korreliert, und der geeignet ist, einen Prozess zur Korrelierung einer Adresse aus dem Informationsprozessor mit dem festgelegten virtuellen Netzwerkidentifikator auszuführen; und
einen Übertragungskontroller (114), der geeignet ist, nach Erhalt einer übertragenen Information einschließlich einer Herkunftsadresse und einer Zieladresse von einem Informationsprozessor einen virtuellen Netzwerkidentifikator festzulegen, der mit der Zieladresse korreliert, und der geeignet ist, eine Kontrolle auszuüben, um die übertragene Information zur Zieladresse unter Bezugnahme auf den festgelegten virtuellen Netzwerkidentifikator, der mit der Herkunftsadresse korreliert, und den festgelegten virtuellen Netzwerkidentifikator, der mit der Zieladresse korreliert, zu übertragen.

6. Das Programm gemäß Anspruch 5, das bei Ausführung den Computer weiterhin veranlasst, zu funktionieren als:
eine zweite Speichereinheit (118), die geeignet ist, eine freigegebene Teilnehmeradresse oder mehrere freigegebene Teilnehmeradressen in Korrelation mit dem virtuellen Netzwerkidentifikator zu speichern, wobei
der Korrelationsprozessor geeignet ist, nach Empfang der Verbindungsanfrage einschließlich der Information zur Zulassung der Verbindung von einem Informationsprozessor eine freigegebene Teilnehmeradresse festzulegen, die mit dem virtuellen Netzwerkidentifikator entsprechend der Information zur Genehmigung der Verbindung unter Bezugnahme auf die zweite Speichereinheit korreliert, und der geeignet ist, die festgelegte freigegebene Teilnehmeradresse daraufhin zu abzufragen, ob eine Verbindung von dem Informationsprozessor genehmigt werden soll oder nicht, und, basierend auf der Rückmeldung zu dieser Abfrage, geeignet ist, festzustellen, ob eine Adresse aus dem Informationsprozessor mit dem virtuellen Netzwerkidentifikator korreliert werden soll oder nicht.

7. Das Programm gemäß Anspruch 6, das bei Ausführung den Computer weiterhin veranlasst zu funktionieren als:
Eine dritte Speichereinheit (122), die geeignet ist, für jeden virtuellen Netzwerkidentifikator eine Freigaberegel für die Festlegung zu speichern, ob eine Adresse aus dem Informationsprozessor mit dem virtuellen Netzwerkidentifikator korreliert werden soll oder nicht oder nicht, basierend auf einer Rückmeldung zu jeder freigegebenen Teilnehmeradresse, die mit dem virtuellen Netzwerkidentifikator korreliert, wobei
der Korrelationsprozessor geeignet ist zu bestimmen, ob die Adresse aus dem Informationsprozessor mit dem virtuellen Netzwerkidentifikator korreliert werden soll oder nicht, basierend auf einer Rückmeldung von jeder freigegebenen Teilnehmeradresse, die mit dem virtuellen Netzwerkidentifikator entsprechend der Information zur Genehmigung der Verbindung, die in der Verbindungsanfrage und in der mit dem virtuellen Netzwerkidentifikator korrelierenden Freigaberegel enthalten ist, korreliert.

8. Das Programm gemäß Anspruch 5, welches bei Ausführung den Computer weiterhin veranlasst zu funktionieren als:
eine Natifikatians-Übertragungs-Einheit (108), die geeignet ist, an den Informationsprozessor eine Notifikationsinformation zu übersenden, die mit der von der ersten Registrierungseinheit erteilten Information zur Genehmigung der Verbindung, korreliert.

9. Ein virtuelles Netzwerksystem, enthaltend
ein Gerät zur virtuellen Netzwerkverbindung (100) zur Bereitstellung von virtuellen Netzwerkverbindungen innerhalb von Informationsprozessoren (L1-L6, R1,R2); und
einen oder mehrere Informationsprozessoren, wobei das Gerät zur virtuellen Netzwerkverbindung (100) umfasst:
Eine Empfangseinheit für Formationsbefehle (102), die geeignet ist, einen Formationsbefehl zur Bildung eines virtuellen Netzwerks zu empfangen;
eine Einheit zur Zuweisung eines Identifikators (106), die geeignet ist, einen eindeutigen virtuellen Netzwerkidentifikator als Rückmeldung auf einen Formationsbefehl, der von der Empfangseinheit für Formationsbefehle empfangen worden ist, zuzuweisen;
eine Empfangseinheit für Kennzeichnungen (104), die geeignet ist, die Kennzeichnung eines Informationsprozessors (L1-L6, R9,R2), der einen Teil des virtuellen Netzwerks bildet, zu empfangen;
eine erste Registrierungseinheit (110), die geeignet ist, einem Informationsprozessor eine Information betreffend die Genehmigung einer Verbindung zu erteilen, wobei der Informationsprozessor für die Empfangseinheit für Kennzeichnungen vorgesehen und geeignet ist, die erteilte Information betreffend die Genehmigung der Verbindung in einer ersten Speichereinheit (116) in Korrelation zu dem virtuellen Netzwerkidentifikator, der durch die Einheit zur Zuweisung eines Identifikators zugeteilt ist, zu registrieren;
einen Korrelationsprozessor (112), der geeignet ist, nach dem Empfang einer Verbindungsanfrage einschließlich der Information betreffend die Zulassung einer Verbindung von einem Informationsprozessor einen virtuellen Netzwerkidentifikator festzulegen, der mit der Information zur Genehmigung der Verbindung unter Bezugnahme auf die erste Speichereinheit korreliert, und der geeignet ist, einen Prozess zur Korrelation einer Adresse aus dem Informationsprozessor mit dem festgelegten virtuellen Netzwerkidentifikator auszuführen; und
einen Übertragungskontroller (114), der geeignet ist, nach Erhalt einer übertragenen Information einschließlich einer Herkunftsadresse und einer Zieladresse von einem Informationsprozessor einen virtuellen Netzwerkidentifikator festzulegen, der mit der Zieladresse korreliert, und der geeignet ist, eine Kontrolle auszuüben, um die übertragene Information zur Zieladresse unter Bezugname auf den festgelegten virtuellen Netzwerkidentifikator, der mit der Herkunftsadresse korreliert, und den festgelegten virtuellen Netzwerkidentifikator, der mit der Zieladresse korreliert, zu übertragen; und
wobei der Informationsprozessor
eine Einheit, die geeignet ist, an das Gerät zur virtuellen Netzwerkverbindung eine Verbindungsanfrage einschließlich der Information zur Genehmigung der Verbindung zu übermitteln, und
eine Einheit, die geeignet ist, die übermittelte Information einschließlich der Herkunftsadresse und der Zieladresse zu übersenden,
umfasst.

10. Ein Verfahren zur Kontrolle der Verbindung eines virtuellen Netzwerks für die Bereitstellung von virtuellen Netzwerkverbindungen zwischen Informationsprozessoren (L1-L6, R1, R2), wobei das Verfahren die Schritte umfasst:
(a) Empfang eines Formationsbefehle zur Bildung eines virtuellen Netzwerks;
(b) Zuweisung eines eindeutigen virtuellen Netzwerkidentifikators als Rückmeldung auf die erhaltenen Formationsbefehle;
(c) Empfang der Kennzeichnung eines Informationsprozessors (L1-L6, R1, R2), der einen Teil des virtuellen Netzwerks bildet;
(d) Erteilung einer Information zur Genehmigung der Verbindung an den gekennzeichneten Informationsprozessor und Registrierung der erteilten Information zur Genehmigung der Verbindung in einer ersten Speichereinheit (116) in Korrelation zu dem zugewiesenen virtuellen Netzwerkidentifikator;
(e) nach Empfang einer Verbindungsanfrage einschließlich der Information zur Zulassung der Verbindung von einem Informationsprozessor: Festlegung eines virtuellen Netzwerkidentifikators, der mit der Information zur Genehmigung der Verbindung unter Bezugnahme auf die erste Speichereinheit korreliert, und Ausführung eines Prozesses zur Korrelation einer Adresse aus dem Informationsprozessor mit dem zugewiesenen virtuellen Netzwerkidentifikator; und
(f) nach Erhalt der übermittelten Information einschließlich einer Herkunftsadresse und einer Zieladresse von einem Informationsprozessor: Festlegung eines virtuellen Netzwerkidentifikators, der mit einer Herkunftsadresse und einer mit einem virtuellen Netzwerkidentifikator korrelierten Zieladresse korreliert, und Durchführung einer Kontrolle zur Übertragung der übermittelten Information an die Zieladresse basierend auf dem virtuellen Netzwerkddentifikator, der mit der Herkunftsadresse korreliert, und dem festgelegten virtuellen Netzwerkidentifikator, der mit der Zieladresse korreliert.

11. Das Vefahren gemäß Anspruch 10, weiterhin umfassend:
(g) einen Schritt zur Speicherung einer freigegebenen Teilnehmeradresse oder von mehrerer freigegebenen Teilnehmeradressen in einer zweiten Speichereinheit (118) in Korrelation zu dem virtuellen Netzwerkidentifikator, wobei
der Schritt (e) nach Erhalt einer Verbindungsanfrage einschließlich der Information zur Genehmigung der Verbindung von einem Informationsprozessor einen Schritt zur Festlegung einer freigegebenen Teilnehmeranschrift beinhaltet, die mit dem virtuellen Netzwerkidentifikator entsprechend der Information zur Genehmigung der Verbindung unter Bezugnahme auf die zweite Speichereinheit (118) korreliert, zur Abfrage der festgelegten erlaubten Teilnehmeradresse dahingehend, ob eine Verbindung von dem Informationsprozessor freigegeben werden soll oder nicht, und, basierend auf der Rückmeldung zu dieser Anfrage, Festlegung, ob eine Adresse von dem Informationsprozessor mit dem virtuellen Netzwerkidentifikator korreliert werden soll oder nicht.

12. Das Verfahren gemäß Anspruch 11, weiterhin umfassend:
(h) einen Schritt zur Speicherung einer Freigaberegel zur Festlegung, ob eine Adresse aus dem Informationsprozessor mit dem virtuellen Netzwerkidentifikator korreliert werden soll oder nicht, für jeden virtuellen Netzwerkidentifikator auf der Basis einer Rückmeldung von jeder freigegebenen Teilnehmeradresse, die mit dem virtuellen Netzwerkidentifikator korreliert, wobei
der Schritt (e) einen Schritt zur Feststellung, ob eine Adresse aus dem Informationsprozessor mit dem virtuellen Netzwerkprozessor korreliert werden soll oder nicht, beinhaltet, basierend auf einer Rückmeldung von jeder freigegebenen Teilnehmeradresse, die mit dem virtuellen Netzwerkidentifikator korreliert, entsprechend der Information zur Genehmigung der Verbindung, die in der Verbindungsanfrage erhalten ist, und der Freigaberegel, die mit dem virtuellen Netzwerkidentifikator korreliert.

13. Das Verfahren gemäß Anspruch 10, weiterhin umfassend:
(i) einen Schritt zur Übermittlung einer Notifikationsmitteilung, die mit der Information zur Genehmigung der Verbindung in Schritt (d) korreliert, an den Informationsprozessor.

## Revendications

1. Appareil de connexion de réseau virtuel (100) destiné à fournir des connexions de réseau virtuel parmi des processeurs d'informations (L1 - L6, R1, R2), de telle sorte que :
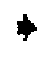 l'appareil de connexion de réseau virtuel (100) comprenne :
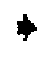 une unité de réception d'instruction de formation (102) qui est adaptée pour recevoir une instruction de formation pour former un réseau virtuel ;
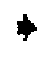 une unité d'attribution d'identifiant (106) qui est adaptée pour attribuer un identifiant de réseau virtuel unique en réponse à l'instruction de formation reçue par l'unité de réception d'instruction de formation ;
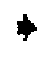 une unité de réception de désignation (104) qui est adaptée pour recevoir une désignation d'un processeur d'informations (L1 - L6, R1, R2) qui fait partie du réseau virtuel ;
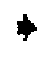 une première unité d'enregistrement (110) qui est adaptée pour fournir des informations de permission de connexion pour un pro-cesseur d'informations qui est désigné à l'unité de réception de désignation et est adapté pour enregistrer les informations de permission de connexion fournies dans une première unité de stockage (116) en corrélation avec l'identifiant de réseau virtuel attribué par l'unité d'attribution d'identifiant ;
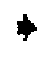 un processeur de corrélation (112) qui est adapté pour déterminer, lors de la réception d'une demande de connexion qui comprend les informations de permission de connexion en provenance d'un processeur d'informations, un identifiant de réseau virtuel corrélé avec les informations de permission de connexion en se référant à la première unité de stockage et est adapté pour exécuter un processus de manière à corréler une adresse du processeur d'informations avec l'identifiant de réseau virtuel déterminé ; et
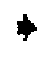 un contrôleur de transmission (114) qui est adapté pour déterminer, lors de la réception d'informations transmises qui comprennent une adresse de source et une adresse de destination en provenance d'un processeur d'informations, un identifiant de réseau virtuel corrélé avec l'adresse de source et un identifiant de réseau virtuel corrélé avec l'adresse de destination, et est adapté pour exécuter une commande de manière à transmettre les infor-mations transmises à l'adresse de destination en se référant à l'identifiant de réseau virtuel déterminé corrélé avec l'adresse de source et à l'identifiant de réseau virtuel déterminé corrélé avec l'adresse de destination.

2. Appareil de connexion de réseau virtuel selon la revendication 1, comprenant en outre ;
une deuxième unité de stockage (118) qui est adaptée pour stocker une ou plusieurs adresses de partie d'approbation en corrélation avec l'identifiant de réseau virtuel, dans lequel:
le processeur de corrélation est adapté pour déterminer, lors de la réception de la demande de connexion qui comprend les informations de permission de connexion en provenance d'un processeur d'informa-tions, une adresse de partie d'approbation corrélée avec l'identifiant de réseau virtuel correspondant aux informations de permission de connexion en se référant à la deuxième unité de stockage, est adapté pour demander à l'adresse de partie d'approbation déterminée s'il convient d'approuver ou pas une connexion à partir du processeur d'informations, et, sur la base de la réponse à la demande, est adapté à déterminer s'il convient de corréler ou pas une adresse du processeur d'informations avec l'identifiant de réseau virtuel.

3. Appareil de connexion de réseau virtuel selon la revendication 2, comprenant en outre :
une troisième unité de stockage (122) qui est adaptée pour stocker, pour chaque identifiant de réseau virtuel, une règle d'approbation pour déterminer s'il convient de corréler ou pas une adresse du processeur d'informations avec l'identifiant de réseau virtuel, sur la base d'une réponse en provenance de chaque adresse de partie d'approbation se corrélant avec l'identifiant de réseau virtuel, dans lequel :
le processeur de corrélation est adapté pour déterminer s'il convient de corréler ou pas l'adresse du processeur d'informations avec l'identifiant de réseau virtuel sur la base d'une réponse de chaque adresse de partie d'approbation corrélée avec l'identifiant de réseau virtuel correspondant aux informations de permission de connexion incluses dans la demande de connexion et la règle d'approbation corrélées avec l'identifiant de réseau virtuel.

4. Appareil de connexion de réseau virtuel selon la revendication 1, comprenant en outre une unité de transmission de notification (108) qui est adapté pour transmettre, au processeur d'informations, des informations de notification corrélées avec les informations de permis-sion de connexion fournies par la première unité d'enregistrement.

5. Programme qui, quand il est exécuté, fait fonctionner un ordinateur de manière à fournir des connexions de réseau virtuel parmi les processeurs d'informations (L1 - L6, R1, R2), de telle sorte que le programme, quand il est exécuté, fait fonctionner l'ordinateur comme :
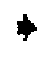 une unité de réception d'instruction de formation (102) qui est adaptée pour recevoir une instruction de formation pour former un réseau virtuel ;
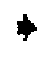 une unité d'attribution d'identifiant (106) qui est adaptée pour attribuer un identifiant de réseau virtuel unique en réponse à l'instruction de formation reçue par l'unité de réception d'instruction de formation;
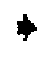 une unité de réception de désignation (104) qui est adaptée pour recevoir une désignation d'un processeur d'informations (L1 - L6, R1, R2) qui fait partie du réseau virtuel ;
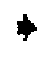 une première unité d'enregistrement (110) qui est adaptée pour fournir des informations de permission de connexion pour un processeur d'informations qui est désigné à l'unité de réception de désignation et est adapté pour enregistrer les informations de permission de connexion fournies dans une première unité de stockage (116) en corrélation avec l'identifiant de réseau virtuel attribué par l'unité d'attribution d'identifiant ;
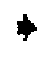 un processeur de corrélation (112) qui est adapté pour déterminer, lors de la réception d'une demande de connexion qui comprend les informations de permission de connexion en provenance d'un processeur d'informations, un identifiant de réseau virtuel corrélé avec les informations de permission de connexion par référence à la première unité de stockage et est adapté pour exécuter un processus de manière à corréler une adresse du processeur d'informations avec l'identifiant de réseau virtuel déterminé ; et
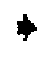 un contrôleur de transmission (114) qui est adapté pour déterminer, lors de la réception d'informations transmises qui comprennent une adresse de source et une adresse de destination en provenance d'un processeur d'informations, un identifiant de réseau virtuel corrélé avec l'adresse de source et un identifiant de réseau virtuel corrélé avec l'adresse de destination, et est adapté pour exécuter une com-mande de manière à transmettre les informations transmises à l'adresse de destination en se référant à l'identifiant de réseau virtuel déterminé corrélé avec l'adresse de source et à l'identifiant de réseau virtuel déterminé corrélé avec l'adresse de destination.

6. Programme selon la revendication 5, qui, quand il est exécuté, fait fonctionner l'ordinateur comme :
une deuxième unité de stockage (118) qui est adaptée pour stocker une ou plusieurs adresses de partie d'approbation en corrélation avec l'identifiant de réseau virtuel, dans lequel :
le processeur de corrélation est adapté pour déterminer, lors de la réception de la demande de connexion qui comprend les informations de permission de connexion en provenance d'un processeur d'informations, une adresse de partie d'approbation corrélée avec l'identifiant de réseau virtuel correspondant aux informations de permission de connexion en se référant à la deuxième unité de stockage, est adapté pour demander à l'adresse de partie d'approbation déterminée s'il convient d'approuver ou pas une connexion à partir du processeur d'informations, et, sur la base de la réponse à la demande, est adapté à déterminer s'il convient de corréler ou pas une adresse du processeur d'informations avec l'identifiant de réseau virtuel.

7. Programme selon la revendication 6, qui, quand il est exécuté, fait fonctionner l'ordinateur comme :
une troisième unité de stockage (122) qui est adaptée pour stocker, pour chaque identifiant de réseau virtuel, une règle d'approbation pour déterminer s'il convient de corréler ou pas une adresse du processeur d'informations avec l'identifiant de réseau virtuel, sur la base d'une réponse en provenance de chaque adresse de partie d'approbation se corrélant avec l'identifiant de réseau virtuel, dans lequel:
le processeur de corrélation est adapté pour déterminer s'il convient de corréler ou pas l'adresse du processeur d'informations avec l'identifiant de réseau virtuel sur la base d'une réponse de chaque adresse de partie d'approbation corrélée avec l'identifiant de réseau virtuel correspondant aux informations de permission de connexion incluses dans la demande de connexion et la règle d'approbation corrélées avec l'identifiant de réseau virtuel.

8. Programme selon la revendication 5, qui, quand il est exécuté, fait fonctionner l'ordinateur comme une unité de transmission de notification (108) qui est adapté pour transmettre, au processeur d'informations, des informations de notification corrélées avec les informations de permission de connexion fournies par la première unité d'enregistrement.

9. Système de réseau virtuel comprenant :
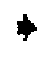 un appareil de connexion de réseau virtuel (100) destiné à fournir des connexions de réseau virtuel parmi des processeurs d'informations (L1 - L6, R1, R2) : et
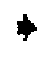 un ou plusieurs processeurs d'informations, de telle sorte que l'appareil de connexion de réseau virtuel (100) comprenne :
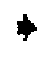 une unité de réception d'instruction de formation (102) qui est adaptée pour recevoir une instruction de formation pour former un réseau virtuel ;
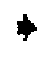 une unité d'attribution d'identifiant (106) qui est adaptée pour attribuer un identifiant de réseau virtuel unique en réponse à l'instruction de formation reçue par l'unité de réception d'instruction de formation ;
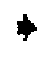 une unité de réception de désignation (104) qui est adaptée pour recevoir une désignation d'un processeur d'informations (L1 - L6, R1, R2) qui fait partie du réseau virtuel ;
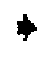 une première unité d'enregistrement (110) qui est adaptée pour fournir des informations de permission de connexion pour un pro-cesseur d'informations qui est désigné à l'unité de réception de désignation et est adapté pour enregistrer les informations de permission de connexion fournies dans une première unité de stockage (116) en corrélation avec l'identifiant de réseau virtuel attribué par l'unité d'attribution d'identifiant ;
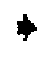 un processeur de corrélation (112) qui est adapté pour déterminer, lors de la réception d'une demande de connexion qui comprend les informations de permission de connexion en provenance d'un processeur d'informations, un identifiant de réseau virtuel corrélé avec les informations de permission de connexion par référence à la première unité de stockage et est adapté pour exé-cuter un processus de manière à corréler une adresse du proces-seur d'informations avec l'identifiant de réseau virtuel déterminé ;et
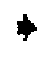 un contrôleur de transmission (114) qui est adapté pour déterminer, lors de la réception d'informations transmises qui comprennent une adresse de source et une adresse de destination en provenance d'un processeur d'informations, un identifiant de réseau virtuel corrélé avec l'adresse de source et un identifiant de réseau virtuel corrélé avec l'adresse de destination, et est adapté pour exécuter une commande de manière à transmettre les infor-mations transmises à l'adresse de destination en se référant à l'identifiant de réseau virtuel déterminé corrélé avec l'adresse de source et à l'identifiant de réseau virtuel déterminé corrélé avec l'adresse de destination ; et
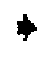 que le processeur d'informations comprenne :
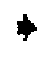 une unité qui est adaptée pour transmettre à l'appareil de connexion de réseau virtuel une demande de connexion qui comprend les informations de permission de connexion ; et
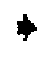 une unité qui est adaptée pour transmettre les informations trans-mises qui comprennent une adresse de source et une adresse de destination.

10. Procédé de commande de connexion d'un réseau virtuel destiné à fournir des connexions de réseau virtuel parmi des processeurs d'informations (L1 - L6, R1, R2), de telle sorte que le procédé comprenne les étapes consistant à :
(a) recevoir une instruction de formation pour former un réseau virtuel;
(b) attribuer un identifiant de réseau virtuel unique en réponse à l'instruction de formation reçue ;
(c) recevoir une désignation d'un processeur d'informations (L1 - L6, R1, R2) qui fait partie du réseau virtuel ;
(d) fournir des informations de permission de connexion pour le processeur d'informations désigné et enregistrer les informations de permission de connexion fournies dans une première unité de stockage (116) en corrélation avec l'identifiant de réseau virtuel attribué ;
(e) déterminer, lors de la réception d'une demande de connexion qui comprend les informations de permission de connexion en provenance d'un processeur d'informations, un identifiant de réseau virtuel corrélé avec les informations de permission de connexion en se référant à la première unité de stockage (116) et exécuter un processus de manière à corréler une adresse du processeur d'infor-mations avec l'identifiant de réseau virtuel déterminé ; et
(f) déterminer, lors de la réception d'informations transmises qui comprennent une adresse de source et une adresse de destination en provenance d'un processeur d'informations, un identifiant de réseau virtuel corrélé avec l'adresse de source et un identifiant de réseau virtuel corrélé avec l'adresse de destination, et exécuter une commande de manière à transmettre les informations trans-mises à l'adresse de destination sur la base de l'identifiant de réseau virtuel déterminé corrélé avec l'adresse de source et à l'identifiant de réseau virtuel déterminé corrélé avec l'adresse de destination.

11. Procédé selon la revendication 10, comprenant en outre :
(g) une étape consistant à stocker une ou plusieurs adresses de partie d'approbation dans une deuxième unité de stockage (118) en corré-lation avec l'identifiant de réseau virtuel, dans lequel :
l'étape (e) comprend une étape consistant à déterminer, lors de la réception de la demande de connexion qui comprend les informations de permission de connexion en provenance d'un processeur d'informations, une adresse de partie d'approbation corrélée avec l'identifiant de réseau virtuel correspondant aux informations de permission de connexion en se référant à la deuxième unité de stockage (118), demander à l'adresse de partie d'approbation déterminée s'il convient d'approuver ou pas une connexion à partir du processeur d'informations, et, sur la base de la réponse à la demande, déterminer s'il convient de corréler ou pas une adresse du processeur d'informations avec l'identifiant de réseau virtuel.

12. Procédé selon la revendication 11, comprenant en outre :
(h) une étape consistant à stocker, pour chaque identifiant de réseau virtuel, une règle d'approbation pour déterminer s'il convient de corréler ou pas une adresse du processeur d'informations avec l'identifiant de réseau virtuel, sur la base d'une réponse en provenance de chaque adresse de partie d'approbation se corrélant avec l'identifiant de réseau virtuel, dans lequel :
l'étape (e) inclut une étape consistant à déterminer s'il convient de corréler ou pas l'adresse du processeur d'informations avec l'identifiant de réseau virtuel sur la base d'une réponse de chaque adresse de partie d'approbation corrélée avec l'identifiant de réseau virtuel correspondant aux informations de permission de connexion incluses dans la demande de connexion et la règle d'approbation corrélées avec l'identifiant de réseau virtuel.

13. Procédé selon la revendication 10, comprenant en outre :
(i) une étape consistant à transmettre, au processeur d'informations, les informations de notification corrélées avec les informations de permission de connexion fournies dans l'étape (d).
